# EUROPEAN PATENT SPECIFICATION

(11) **EP 3 605 381 B1**
(45) Date of publication and mention of the grant of the patent: **30.07.2025**
(21) Application number: 18777967.3
(22) Date of filing: 23.03.2018
(51) Int. Cl.: H04L 9/40, H04L 9/00, H04L 9/32, G06F 21/64, G06F 21/60, G06N 99/00, G06F 7/544

(54) **INFORMATION PROVISION DEVICE, INFORMATION PROVISION SYSTEM, INFORMATION PROVISION METHOD, AND PROGRAM**
INFORMATIONSBEREITSTELLUNGSVORRICHTUNG, INFORMATIONSBEREITSTELLUNGSSYSTEM, INFORMATIONSBEREITSTELLUNGSVERFAHREN UND PROGRAMM
DISPOSITIF DE DIFFUSION D'INFORMATIONS, SYSTÈME DE DIFFUSION D'INFORMATIONS, PROCÉDÉ DE DIFFUSION D'INFORMATIONS, ET PROGRAMME

(30) Priority: 31.03.2017 JP 2017069941
(43) Date of publication of application: 05.02.2020
(73) Proprietor: Mitsubishi Heavy Industries, Ltd., Chiyoda-ku Tokyo 100-8332 (JP)
(72) Inventor: TAKAO Kenji, Tokyo 108-8215 (JP)
(74) Representative: Henkel & Partner mbB
(86) International application number: PCT/JP2018/011733
(87) International publication number: WO 2018/181003

(56) References cited:
- JP-A- 2016 004 548
- JP-A- 2016 208 347
- JP-A- H06 187 315
- US-A1- 2002 161 624
- US-A1- 2014 058 534
- US-A1- 2016 004 794
- US-A1- 2017 013 047

## Description

### [Technical Field]

The present invention relates to an information provision device, an information provision system, an information provision method, and a program. Priority is claimed on Japanese Patent Application No. 2017-69941, filed March 31, 2017.

### [Background Art]

A number of practical examples of artificial intelligence such as a neural network have been proposed. For example, Patent Literature 1 describes an additional learning device capable of implementing data learning which is not affected by negative transition due to a combination of over-learning and data sets in additional learning of the neural network.

### [Citation List]

### [Patent Literature]

[Patent Literature 1]
   Japanese Unexamined Patent Application, First Publication No. 2016-143094
[Patent Literature 2] US 2016/004794 A1
[Patent Literature 3] US 2014/058534 A1
[Patent Literature 4] US 2002/161624 A1

### [Summary of Invention]

### [Technical Problem]

When business is deployed using artificial intelligence, it is necessary to prevent learned artificial intelligence generated in accordance with a customer from being falsified or stolen by a third party. However, as of now, learned artificial intelligence can be protected only by trade secrets, a contract, and the like, and service providers need to make an effort to protect the learned artificial intelligence by themselves.

The present invention is made in view of the above problems, and an object thereof is to provide an information provision device, an information provision system, an information provision method, and a program which can strongly protect learned artificial intelligence.

### [Solution to Problem]

Accordingly, there is provided an information provision system as set out in independent claim 1, an information provision method as set out in independent claim 7, and a program as set out in independent claim 8. Advantageous developments are defined in the dependent claims. customer.

In addition, according to a second aspect of the present invention, the design information acquisition unit of the support information provision device described above is configured to refer to one of the recording devices included in the distributed recording system and acquire the design information.

In addition, according to a third aspect of the present invention, the design information described above is encrypted and recorded in the distributed recording system.

In addition, according to a fourth aspect of the present invention, the artificial intelligence generation unit of the support information provision device described above is configured to generate a part of the learned artificial intelligence on the basis of the acquired parameter group and the acquired design information, and the support information transmission unit is configured to transmit intermediate data output from the part of the generated artificial intelligence to the information processing device of the customer as the support information.

In addition, according to a fifth aspect of the present invention, the support information provision device described above further includes an additional learning processing unit configured to duplicate artificial intelligence equivalent to the learned artificial intelligence, to use a plant data group provided by the customer who is provided with the support information as teacher data, and to cause at least a part of the duplicated artificial intelligence to perform additional learning.

In addition, according to a sixth aspect of the present invention, an information provision system includes the support information provision device described above and the distributed recording system.

In addition, according to a seventh aspect of the present invention, an information provision method includes a parameter group acquisition step of referring to one of recording devices included in a distributed recording system in which parameter groups characterizing the learned artificial intelligence are distributed and recorded in the recording devices in advance, and acquiring the parameter groups, a design information acquisition step of acquiring design information in which information capable of identifying an application place in the learned artificial intelligence of each of the parameter groups is specified, an artificial intelligence generation step of generating at least a part of the learned artificial intelligence on the basis of the acquired parameter groups and the acquired design information, and a support information transmission step of transmitting the support information output from at least a part of the generated artificial intelligence to an information processing device of a customer.

According to an eighth aspect of the present invention, a program causes a computer for providing customer-desired support information using learned artificial intelligence to execute a parameter group acquisition step of referring to one of recording devices included in a distributed recording system in which parameter groups characterizing the learned artificial intelligence are distributed and recorded in the recording devices in advance, and acquiring the parameter groups, a design information acquisition step of acquiring design information in which information capable of

### [Advantageous Effects of Invention]

According to the information provision device, the information provision system, the information provision method, and the program described above, it is possible to strongly protect learned artificial intelligence.

### [Brief Description of Drawings]

FIG. 1 is a diagram which shows an overall structure of an information provision system according to a first embodiment.
FIG. 2 is a diagram which shows a functional configuration of an information provision device according to the first embodiment.
FIG. 3 is a diagram which shows a data structure of a distributed recording system according to the first embodiment.
FIG. 4 is a diagram which shows a processing flow of the information provision device according to the first embodiment.
FIG. 5 is a diagram which shows a data structure of customer information according to the first embodiment.
FIG. 6 is a diagram which shows a data structure of design information according to the first embodiment.
FIG. 7 is a diagram for describing a function of the information provision device according to the first embodiment.
FIG. 8 is a diagram which shows an overall structure of an information provision system according to a second embodiment.
FIG. 9 is a diagram which shows a data structure of design information according to the second embodiment.
FIG. 10 is a diagram which shows a functional configuration of an information provision device according to a third embodiment.

### [Description of Embodiments]

### <First embodiment>

Hereinafter, a first embodiment of the present invention will be described with reference to drawings. The same or equivalent constituents in all drawings will be denoted by the same reference numerals, and the duplicated description will be omitted.

### (Overall structure of information provision system)

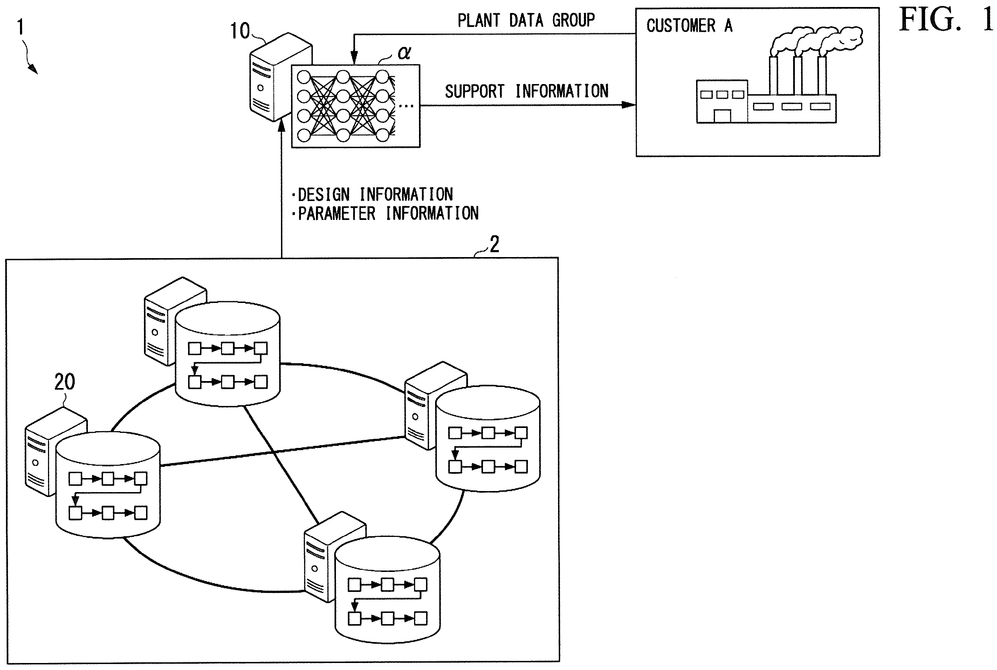

FIG. 1 is a diagram which shows an overall structure of an information provision system according to the first embodiment.

An information provision system 1 according to the first embodiment provides customer-desired support information using learned artificial intelligence. For example. the information provision system 1 provides a customer A who operates a power generation plant with support information such as abnormality sign diagnostic information, power demand forecast information, and the like of the power generation plant. The information provision system 1 provides the support information using artificial intelligence α which has learned the power generation plant owned by the customer A in advance.

The artificial intelligence α may be, for example, subjected to optimization (learning) by using, as teacher data, the past five-year plant data group (output power, operation commands, detection values of various instruments, and the like) of the power generation plant owned by the customer A. The learned artificial intelligence α created in this manner can be sequentially input a plant data group of the power generation plant which is in operation, and output the support information indicating a future status of the power generation plant on the basis of the plant data group. It is assumed that the artificial intelligence α is a neural network forming a multi-stage layer structure in the present embodiment. However, it is not limited to this aspect in other embodiments.

As shown in FIG. 1, the information provision system 1 includes an information provision device 10 and a distributed recording system 2.

The information provision device 10 provides (transmits) support information to a terminal device (information processing device) of a customer A. In the present embodiment, the information provision device 10 is owned by a service provider (a provider of support information on a power generation plant), and is communicatively connected with the terminal device of the customer A through a public or dedicated communication line.

As shown in FIG. 1, the distributed recording system 2 includes a plurality of recording devices 20 connected by a wide area communication network. The recording device 20 is a computer that constitutes a "node" of the distributed recording system 2. The plurality of recording devices 20 are synchronized with each other by peer-to-peer communication, and always maintain a state in which the same information is recorded. In addition, when there is falsification of recording information at one node (recording device 20), appropriate recording information is determined by majority vote or the like, and falsification data is corrected immediately.

The distributed recording system 2 is a distributed recording system to which a block chain is applied. A block chain is a database which stores data by generating a unit of data referred to as a "block" at every fixed time and linking them like a chain. When data contained in one block is falsified, consistency with other blocks linked to the block is lost, and thus it is immediately detected that there has been falsification.

As described above, the distributed recording system 2 realizes a recording system in which falsification of data is extremely difficult.

The distributed recording system 2 is not limited to the embodiment described above to which a block chain is applied. In other embodiments, any aspect may be used as long as it is a distributed recording system formed of a plurality of nodes and has a mechanism for registering and managing data by forming a consensus.

In each node (recording device 20) of the distributed recording system 2 according to the present embodiment, parameter groups characterizing the learned artificial intelligence are distributed and recorded in advance. The parameter groups according to the present embodiment are, for example, a numerical value group derived as a result of optimization (learning) based on a past plant data group of the customer A, and uniquely characterize the artificial intelligence α. In the present embodiment, each of the parameter groups recorded herein is applied as a "weighted value" between respective units (to be described below) which form the neural network.

The distributed recording system 2 according to the present embodiment may be described as an aspect in which a service provider possesses and manages an entirety thereof (all recording devices 20), but the present invention is not limited to this aspect in other embodiments. In other embodiments, for example, the service provider may possess and manage some of the recording devices 20 constituting the distributed recording system 2 and a customer (the customer A) may possess and manage other recording devices 20. A third party providing a cloud service may also possess and manage the entire distributed recording system 2.

Moreover, in FIG. 1, it is shown that the information provision device 10 and respective recording devices 20 constituting the distributed recording system 2 exist separately as hardware, but the present embodiment is not limited thereto. In the embodiment, the information provision device 10 may serve and function as one of the nodes (recording devices 20) of the distributed recording system 2. Moreover. in the embodiment, a terminal device (an information processing device provided with support information) possessed by a customer (the customer A) may serve and function as one of the nodes of the distributed recording system 2.

### (Functional configuration of information provision device)

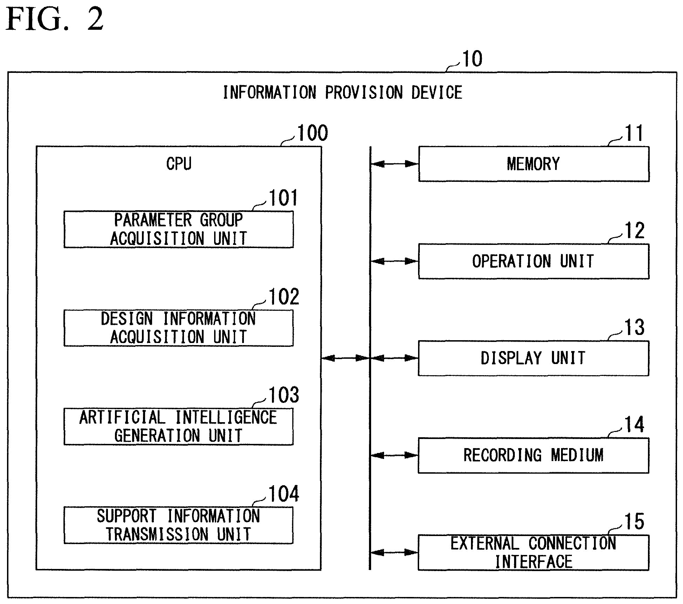

FIG. 2 is a diagram which shows a functional configuration of an information provision device according to the first embodiment.

As shown in FIG. 2, the information provision device 10 includes a CPU 100, a memory 11, an operation unit 12, a display unit 13, a recording medium 14, and an external connection interface 15. The CPU 100 is a processor (arithmetic operation unit) that controls an entire operation of the information provision device 10. The CPU 100 reads a program or data stored in the recording medium 14 or the like onto the memory 11, and realizes each function to be described below by executing processing.

The memory 11 is a volatile memory used as a work area or the like of the CPU 100.

The operation unit 12 includes, for example, a mouse, a touch panel, a keyboard, and the like, and inputs various types of operations and the like to the CPU 100 after receiving an instruction from an operator (user).

The display unit 13 is realized by, for example, a liquid crystal display, and displays a result of processing performed by the CPU 100.

The recording medium 14 is realized by, for example, a hard disk drive (HDD), a solid state drive (SSD), and the like, and stores an operation system (OS), an application program, and various types of data.

The external connection interface 15 is an interface with an external device. In the present embodiment, the external device is a terminal device of a customer A that is provided with support information, and each node (recording device 20) of the distributed recording system 2.

Next, various types of functions of the CPU 100 according to the present embodiment will be described.

The parameter group acquisition unit 101 refers to one recording device 20 included in the distributed recording system 2, and acquires parameter groups characterizing learned artificial intelligence (for example, the artificial intelligence α for the customer A).

The design information acquisition unit 102 acquires design information on the learned artificial intelligence. Here, "design information" is information capable of identifying an application place in the learned artificial intelligence (artificial intelligence α) of each of the parameter groups acquired by the parameter group acquisition unit 101.

The artificial intelligence generation unit 103 generates learned artificial intelligence on the basis of the parameter group acquired by the parameter group acquisition unit 101 and the design information acquired by the design information acquisition unit 102.

The support information transmission unit 104 transmits support information output from at least a part of the artificial intelligence generated by the artificial intelligence generation unit 103 to a terminal device of a customer.

### (Data structure of distributed recording system)

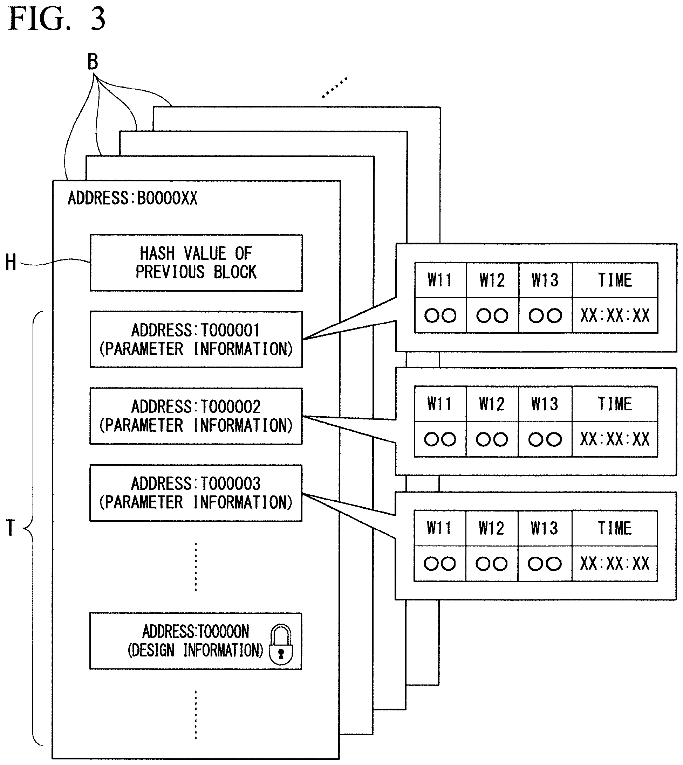

FIG. 3 is a diagram which shows a data structure of a distributed recording system according to the first embodiment.

A plurality of blocks B are recorded to be linked in one node (recording device 20) of the distributed recording system 2, and constitute a block database. These block databases are synchronized on all nodes, and, in principle, the same information (block database) is recorded on all nodes.

Specifically, as shown in FIG. 3, a block B includes a hash value H of a previous block B previously generated in a chronological order. When a previous block B is falsified, consistency with this hash value H enables this to be distinguished.

The block B includes a plurality of transactions T issued in a certain time zone. "Transaction" in the present embodiment is a unit of recording request issued by a user of the distributed recording system 2 toward the distributed recording system 2. In the present embodiment, the user issues one recording request for parameter sets (W11, S12, W13, ..., and so forth) applied to a certain layer of certain learned artificial intelligence (the artificial intelligence α).

A parameter set recorded in each transaction T included in one block B is not limited to only a parameter set for one artificial intelligence (the artificial intelligence α). When a plurality of users have concurrently issued recording requests for parameter sets of different artificial intelligences, a transaction T in which the parameter sets of different artificial intelligences are recorded may be included in one block. For example, one block B may include a transaction T having a parameter set applied to an X^{th} layer of learned artificial intelligence β for a customer B, a transaction T having a parameter set applied to a Y^{th} layer of learned artificial intelligence γ for a customer C, and the like in any order. However, information recorded in each transaction T is only numerical values of the parameter sets (W11, W12, W13, ..., and so forth) to be applied to any layer of any artificial intelligence and information on a time at which a corresponding transaction T is issued. That is, the transaction T does not include information for distinguishing to which numbered layer of which artificial intelligence the parameter set is applied.

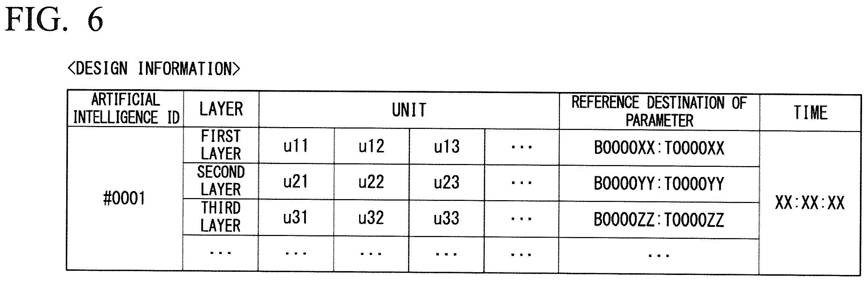

In the present embodiment, design information, which is information required to generate one learned artificial intelligence can be recorded in the transaction T. Information capable of identifying each application place of the parameter set recorded in each transaction T (which of the artificial intelligences and what number of the layers should be applied) is defined in the design information. The design information is recorded in the distributed recording system 2 while it is encrypted using an encryption key previously defined by a developer of the artificial intelligence. A data structure of the design information will be described below (refer to FIG. 6).

### (Processing flow of information provision device)

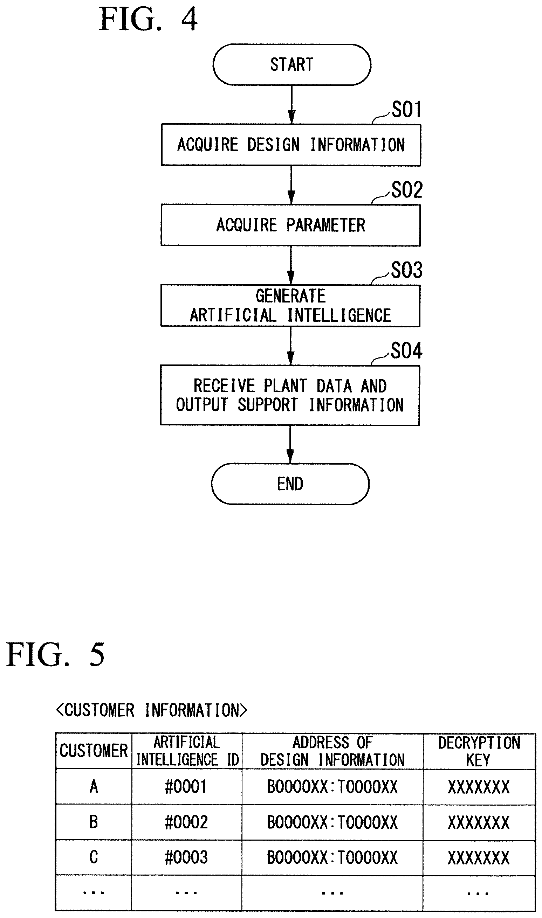

FIG. 4 is a diagram which shows a processing flow of the information provision device according to the first embodiment.

FIG. 5 is a diagram which shows a data structure of customer information according to the first embodiment.

FIG. 6 is a diagram which shows a data structure of design information according to the first embodiment.

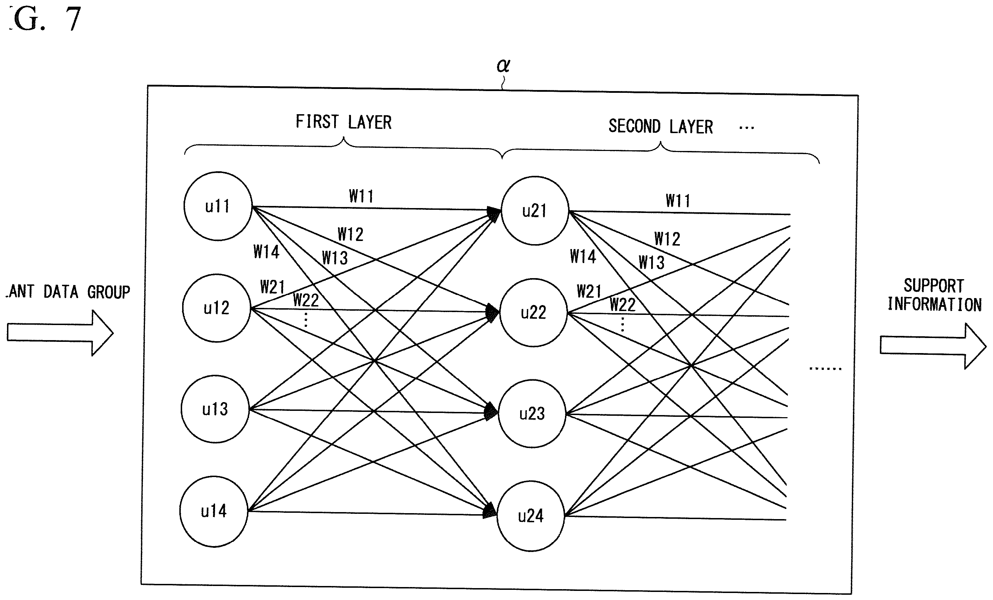

FIG. 7 is a diagram for describing a function of the information provision device according to the first embodiment. Hereinafter, a processing flow of the information provision device 10 will be described in detail with reference to FIGS. 4 to 7.

In order to start a service for customers using artificial intelligence, the processing flow shown in FIG. 4 is executed at a time of generating artificial intelligence corresponding to a customer (for example, the artificial intelligence α which has completed learning for the customer A) in the information provision device 10.

In order to start provision of support information to the customer A, the information provision device 10 performs generation of the artificial intelligence α which has completed learning for the customer A. Specifically, the design information acquisition unit 102 of the information provision device 10 refers to customer information prepared in advance, and acquires design information on the artificial intelligence α recorded in the distributed recording system 2 (step S01).

Here, as shown in FIG. 5, an "artificial intelligence ID" which is an identifier of artificial intelligence corresponding to each customer, an "address of design information" which indicates a storage location in the distributed recording system 2 of corresponding design information, and a "decryption key" for decrypting corresponding design information are associated with each other and recorded in the customer information.

The customer information shown in FIG. 5. in the present embodiment, is prepared in advance in the local recording medium 14 (FIG. 2) provided in the information provision device 10, but it is not limited to this aspect in other embodiments. For example, the customer information may be recorded in another terminal device different from the information provision device 10 in other embodiments.

In step S01, the design information acquisition unit 102 refers to the customer information and acquires an address of design information of the artificial intelligence α (artificial intelligence ID=#0001) which has completed learning for the customer A and a decryption key for decrypting the design information. Next, the design information acquisition unit 102 accesses one of the recording devices 20 constituting the distributed recording system 2 and acquires design information (encrypted one) of the artificial intelligence α. Furthermore, the design information acquisition unit 102 decrypts the encrypted design information using a corresponding decryption key and acquires the design information as shown in FIG. 6.

As shown in FIG. 6, an "artificial intelligence ID," a "layer" number, a "unit," an "address of parameter," and a "time" at which a transaction T related to a recording request of the design information is issued are associated with each other and recorded in the design information.

An "artificial intelligence ID" is an identifier for identifying a learned artificial intelligence (the artificial intelligence α).

A "layer" is an identifier for α layer of a neural network that constitutes the artificial intelligence α.

A "unit" defines each of a plurality of units (u11, u12, ..., and so forth) constituting each layer. A "unit" is a smallest unit of components of the neural network, and is also referred to as "neuron." One unit receives an output value of a unit that belongs to a previous layer, performs an arithmetic operation of a predetermined function using the output value as a variable, and outputs a result of the arithmetic operation to another unit belonging to a next layer. Functions that constitute each unit, an input source, an output destination, and the like are uniquely defined in this "unit" column.

An "address of parameter" is an address in the distributed recording system 2 indicating a storage destination of a parameter set applied to each layer.

Next, in FIG. 4, the parameter group acquisition unit 101 of the information provision device 10 acquires a parameter set to be applied to each layer of the artificial intelligence α (step S02). Here, the parameter group acquisition unit 101 refers to the design information (FIG. 6) acquired in step S01, and acquires a storage location (address) of the parameter set to be applied to each layer of the artificial intelligence α (artificial intelligence ID=#0001). Then, the parameter group acquisition unit 101 accesses one of the recording devices 20 constituting the distributed recording system 2, and acquires parameter sets (W11, W12, .... and so forth) to be applied to each layer on the basis of the address (address capable of identifying a block B and a transaction T) acquired from the design information (refer to FIG. 3).

Next, in FIG. 4, the artificial intelligence generation unit 103 of the information provision device 10 generates the artificial intelligence α using the design information on the artificial intelligence α acquired in step S01 and the parameter sets to be applied to each layer of the artificial intelligence α acquired in step S02 (step S03). Specifically, the artificial intelligence generation unit 103 applies a parameter set (a parameter set read from an address defined in the design information) corresponding to a layer defined in the design information, as a weighted value, to an output of each unit belonging to the layer.

For example, the artificial intelligence generation unit 103, as shown in FIG. 7, refers to a transaction T (FIG. 3) designated in an address (FIG. 6) which is "B0000XX:T0000XX" recorded in the design information for each output of units u11, u12, u13, ..., and so forth of a first layer. Then, the artificial intelligence generation unit 103 sets each of the parameter sets (W11, W12, W13, .... and so forth) as a weighted value of each output of units u11, u12, ..., and so forth of the first layer. Here, for example, a parameter W11 is a weighted value applied to (multiplied by) an output value from a unit u11 of the first layer to a unit u21 of a second layer. In addition, a parameter W12 is a weighted value applied to an output value from the unit u11 of the first layer to a unit u22 of the second layer. Similarly, a parameter W21 is a weighted value applied to an output value from a unit u12 of the first layer to the unit u21 of the second layer. In the following description, each parameter is applied to an output value from each unit to a unit of a next layer as a weighted value in a similar manner.

Moreover, the artificial intelligence generation unit 103, as shown in FIG. 7, refers to a transaction T designated in an address (FIG. 6) which is "B0000YY:T0000YY" recorded in the design information and applies each of the parameter sets (W11, W 12, W13, ..., and so forth) as a weighted value to each output of units u21, u22, u23, ..., and so forth of the second layer.

Similarly, the artificial intelligence generation unit 103 generates the artificial intelligence α by applying the parameters W11, W12, ..., and so forth corresponding to each layer to the output of each unit of a third layer, a fourth layer, ..., and so forth.

Next, in FIG. 4, the support information transmission unit 104 of the information provision device 10 transmits support information to the customer A using the artificial intelligence α generated in step S03 (step S04). Here, the support information transmission unit 104 inputs plant data groups sequentially supplied from a power generation plant of the customer A to the generated artificial intelligence α as shown in FIG. 7. Then, the support information transmission unit 104 transmits support information obtained as the output of the artificial intelligence α to the customer A.

### (Action, Effect)

As described above, the information provision system 1 according to the first embodiment records the parameter groups that characterize learned artificial intelligence in the distributed recording system 2, and separately prepares design information that is integrated information for generating artificial intelligence from the parameter groups. In this manner, the parameter groups recorded in the distributed recording system 2 are strongly protected against falsification. In addition, since each parameter group recorded in the distributed recording system 2 is just a collection of data that is not decipherable by itself alone, there is no concern that the artificial intelligence α is stolen by an unauthorized access of a third party.

In the information provision system 1 according to the first embodiment, design information itself is recorded as one transaction T in the distributed recording system 2. Then, the design information acquisition unit 102 acquires the design information by referring to one recording device 20 included in the distributed recording system 2. In this manner, the design information is strongly protected against falsification.

In addition, in the information provision system 1 according to the first embodiment, design information is encrypted and then recorded in the distributed recording system 2.

As described above, it is possible to safely protect artificial intelligence with a minimum processing load (encryption processing) by dividing completed artificial intelligence into parameter groups and design information and protecting only the design information using encryption.

In the first embodiment, the design information is recorded in the distributed recording system 2, but it is not limited to this aspect in other embodiments. In other embodiments, it may be recorded in a local computer possessed by the service provider.

### <Second embodiment>

Next, a second embodiment of the present invention will be described with reference to drawings.

### (Overall structure of information provision system)

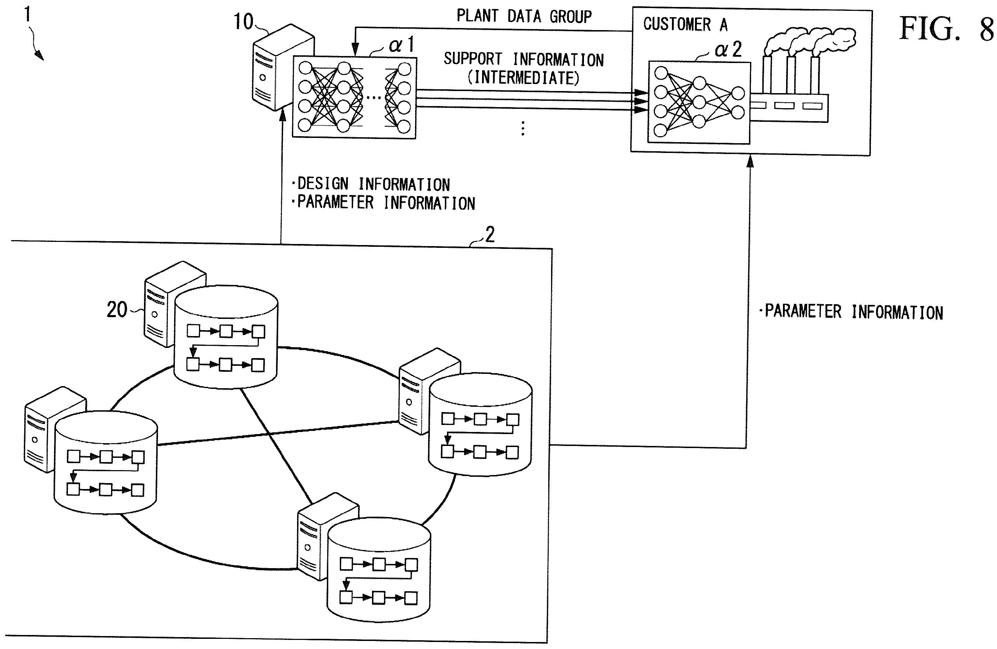

FIG. 8 is a diagram which shows an overall structure of an information provision system according to a second embodiment.

The information provision system 1 according to the second embodiment, like in the first embodiment, provides support information regarding a power generation plant to a customer A using learned artificial intelligence α for the customer A. However, the information provision system in the present embodiment is different from the first embodiment in that only a part of artificial intelligence α is generated in the information provision device 10, and a remained part is generated in a terminal device of the customer A.

Specifically, as shown in FIG. 8, the artificial intelligence α for the customer A, which is configured from first to ninth layers, is generated to be divided into partial artificial intelligence α1 that is a part thereof (for example, the first to seventh layer) and partial artificial intelligence α2 that is a remained part (for example, eighth to ninth layers). Moreover, while the partial artificial intelligence α1 is generated in the information provision device 10, the partial artificial intelligence α2 is generated in a terminal device possessed by the customer A.

In the second embodiment, support information that the partial artificial intelligence α1 transmits toward the customer A is intermediate data generated in an intermediate layer (the seventh to eighth layers) of the artificial intelligence α. The partial artificial intelligence α2 on the customer A side receives intermediate data output by the partial artificial intelligence α1 as support information. Then, the intermediate data is input to the partial artificial intelligence α2 and the partial artificial intelligence α2 outputs final support information.

### (Data structure of design information)

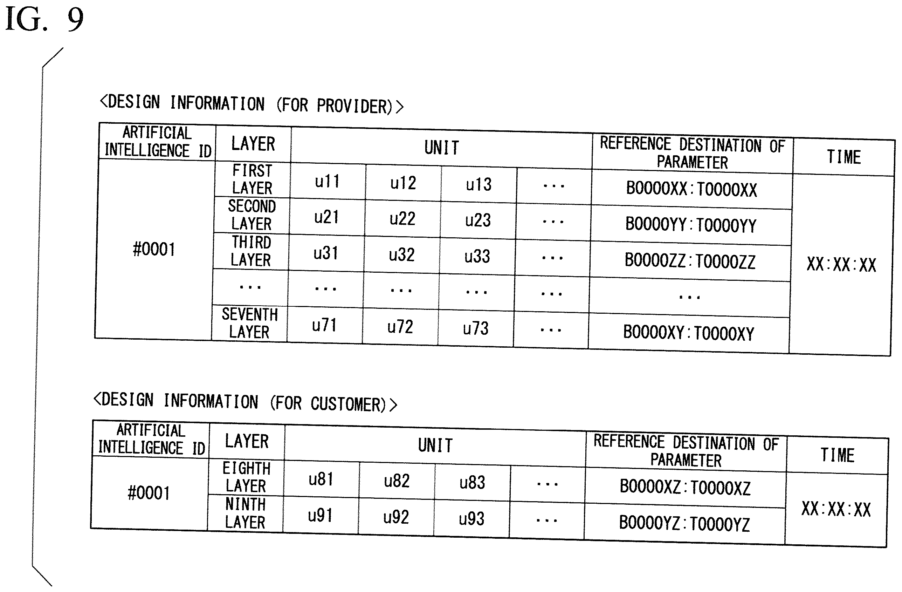

FIG. 9 is a diagram which shows a data structure of design information according to the second embodiment.

In the present embodiment, as shown in FIG. 9, the service provider prepares two pieces of design information, which are design information for the service provider and design information for a customer, as design information related to the artificial intelligence α (artificial intelligence ID=#0001) for the customer A. When the service provider starts to provide a service to the customer A. the service provider first acquires the design information for the service provider (refer to an upper part of FIG. 9) from the distributed recording system 2. The service provider generates the partial artificial intelligence α1 of the artificial intelligence α in the information provision device 10 in the same procedure as in the first embodiment on the basis of the design information for the service provider.

In addition, when the service provision to the customer A is started, the service provider further acquires the design information for the customer (refer to a lower part of FIG. 9) from the distributed recording system 2. The service provider receives a public key from the customer A, encrypts the design information for a customer using the public key again, and transmits it to the customer A. The customer A decrypts the received design information for a customer using his private key. The artificial intelligence generation unit 103 provided in the terminal device of the customer A generates the partial artificial intelligence α2 of the artificial intelligence α in the terminal device of the customer A on the basis of the decrypted design information for the customer.

### (Action, Effect)

As described above, in the second embodiment, artificial intelligence (the artificial intelligence α) learned for a customer (the customer A) is generated to be divided into a terminal device (the information provision device 10) on a service provider side and a terminal device on a customer side. That is, the artificial intelligence generation unit 103 according to the present embodiment generates only a part of the learned artificial intelligence (the partial artificial intelligence α1) on the basis of the acquired parameter groups and design information. In addition, the support information transmission unit 104 transmits intermediate data output from a part of the generated artificial intelligence (the partial artificial intelligence α1) to the terminal device of the customer as support information for the customer.

With such an aspect, the support information transmitted from the terminal device (the information provision device 10) on a service provider side to the terminal device on a customer side is information originally used in an internal operation of the artificial intelligence α, and will only be intermediate data that does not make sense by itself alone. Therefore, even if communication data is not encrypted, it is possible to enhance security against tapping of communication data by a third party.

Note that, in the second embodiment, it is described that a front stage (for example, the first to seventh layers) of the learned artificial intelligence α constituted by the first to ninth layers is generated in the information provision device 10, and a rear stage (for example, the eighth to ninth layers) thereof is generated in a terminal device owned by the customer A. However, the present invention is not limited to this aspect in other embodiments.

For example, in other embodiments, the front stage (for example, the first to second layers) and the rear stage (for example, the eighth to ninth layers) of the learned artificial intelligence α may be generated in the terminal device owned by the customer A, and a middle stage (for example, the third to seventh layers) thereof may be generated in the information provision device 10. In this case, the plant data group of the customer A is input to the front stage (the first layer) of the artificial intelligence α generated in the terminal device owned by the customer A. Information that the terminal device owned by the customer A transmits to the information provision device 10 is not the plant data group itself, and is intermediate data generated in the middle layer (the second layer to third layer) of the artificial intelligence α.

In this manner, data transmitted from the customer A to the information provision device 10 can be intermediate data of the artificial intelligence α instead of raw data (plant data group). As a result, it is possible to further enhance security against tapping of communication data by a third party.

### <Third embodiment>

Next, a third embodiment of the present invention will be described with reference to drawings.

### (Functional configuration of information provision device)

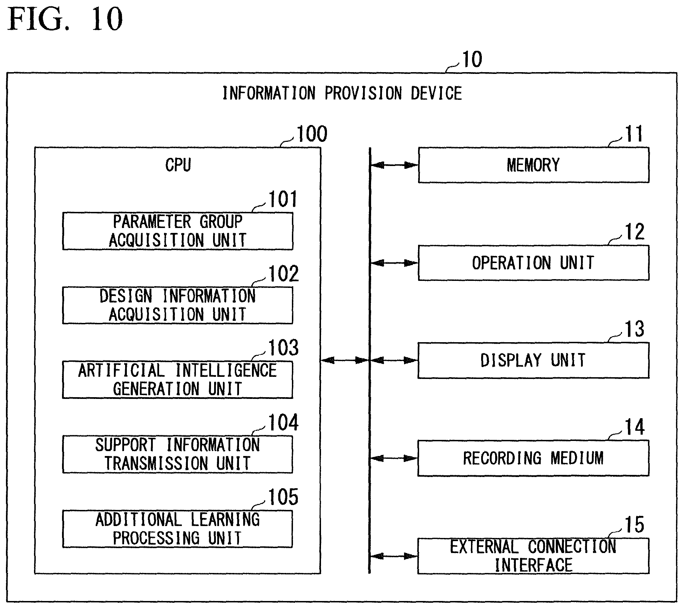

FIG. 10 is a diagram which shows a functional configuration of an information provision device according to a third embodiment.

Here, the information provision system 1 according to the third embodiment, like in the second embodiment, generates learned artificial intelligence α across a plurality of terminal devices. The information provision system 1 according to the present embodiment is different from the second embodiment in that it has a function (an additional learning processing unit 105) of performing additional learning on partial artificial intelligence α2 generated in the terminal device of the customer A.

A specific configuration and content of processing of the information provision device 10 according to the third embodiment will be described below.

The additional learning processing unit 105 of the information provision device 10 shown in FIG. 10 internally duplicates (generates) artificial intelligence α' equivalent to the artificial intelligence α apart from the learned artificial intelligence α (α1+α2) when service provision to the customer A is started. Then, the additional learning processing unit 105 uses plant data groups sequentially provided from the customer A who is a provision destination of support information as teacher data while service using the artificial intelligence α is provided, and causes a portion corresponding to the partial artificial intelligence α2 of the artificial intelligence α' internally duplicated (partial artificial intelligence α2') to perform additional learning.

As a result of the additional learning by the additional learning processing unit 105, when the partial artificial intelligence α2' capable of providing support information with even better prediction accuracy than the artificial intelligence α is completed, a service provider records a parameter of the partial artificial intelligence α2' in the distributed recording system 2, and creates design information of the partial artificial intelligence α2'.

In this manner, in order to reflect effect of an additional learning portion to a service, it is sufficient to provide the customer A with the design information of the partial artificial intelligence α2'. For this reason, it is possible to reduce a burden required for service updating work depending on a customer.

The information provision system 1 and the information provision device 10 according to the first to third embodiments have been described in detail, but specific aspects of the information provision system 1 and the information provision device 10 are not limited to those described above, and various design changes and the like can be made within a range not departing from the gist.

For example, it is described that the artificial intelligence α (α1+α2) is subjected to learning with the past plant data group of the customer A set as teacher data in the first to third embodiments, but the present invention is not limited to this aspect in other embodiments.

In other embodiments, for example, artificial intelligence may be subjected to learning with all of the past plant data group collected from each of a plurality of customers (customer A, customer B, customer C, ..., and so forth) set as teacher data. Master artificial intelligence X subjected to such learning is artificial intelligence optimized for all of the plurality of customers.

In this case, the information provision device 10 according to the other embodiments described above may generate common artificial intelligence X1 that is a part of the master artificial intelligence X (for example, first to seventh layers of the master artificial intelligence X) in the information provision device 10. Then, the information provision device 10 may generate artificial intelligence optimized for each customer in the terminal device of a corresponding customer for a remained part (for example, eighth to ninth layers) of the artificial intelligence.

In the distributed recording system 2 according to each embodiment described above, it is described that data sets to be applied to one layer of an artificial intelligence are collectively recorded in each transaction T (FIG. 3) included in the block B, but the present invention is not limited to this aspect in other embodiments.

For example, the data sets may be recorded in units of one parameter (for example, "W11," "W12"), or may be recorded in units of one artificial intelligence (artificial intelligence α, β, ..., and so forth) in one transaction T.

In addition, in each embodiment described above, it is described that the information provision system 1 and the information provision device 10 provide support information for supporting an operation of a power generation plant operated by a customer, but the present invention is not limited to this aspect in other embodiments. For example, they may provide support information for supporting an operation of a plant other than the power generation plant (a chemical plant, a petroleum plant, a large apparatus, or the like) in the other embodiments.

In each embodiment described above, a process of various types of processing of the information provision device 10 described above is stored in a computer-readable recording medium in a form of program, and the various types of processing is performed by a computer reading and executing this program. In addition, the computer-readable recording medium refers to a magnetic disc, a magneto-optical disc, a CD-ROM, a DVD-ROM, a semiconductor memory, and the like. Moreover, this computer program may be distributed to the computer via a communication line, and the computer which receives this distribution may execute the program.

The program described above may be a program for realizing a part of the function described above. Furthermore, it may also be a so-called difference file (a difference program) that can realize the function described above in combination with a program which is already recorded on a computer system. Furthermore, the information provision device 10 may be constituted by one computer or may be constituted by a plurality of computers connected in a communicable manner.

While several embodiments of the present invention have been described, these embodiments have been presented by way of example only, and are not intended to limit the scope of the invention.

### [Industrial Applicability]

According to the information provision device, the information provision system, the information provision method, and the program described above, it is possible to strongly protect learned artificial intelligence.

### [Reference Signs List]

1 Information provision system
10 Information provision device
100 CPU
101 Parameter group acquisition unit
102 Design information acquisition unit
103 Artificial intelligence generation unit
104 Support information transmission unit
105 Additional learning processing unit
2 Distributed recording system
20 Recording device

## Claims

1. An information provision system (1) comprising:
an information provision device (10) configured to provide customer-desired support information using learned artificial intelligence, the information provision device (10) comprising:
a parameter group acquisition unit (101) configured to refer to one of recording devices (20) included in a recording system (2) in which parameter groups characterizing the learned artificial intelligence are distributed and recorded in the recording devices (20) in advance, and to acquire the parameter groups;
a design information acquisition unit (102) configured to acquire design information in which information capable of identifying an application place in the learned artificial intelligence of each of the parameter groups is specified;
an artificial intelligence generation unit (103) configured to generate at least a part of the learned artificial intelligence on the basis of the acquired parameter groups and the acquired design information; and
a support information transmission unit (104) configured to transmit the support information output from at least a part of the generated artificial intelligence to an information processing device of a customer,
wherein the design information is prepared separately from the parameter groups; and
the recording system (2),
wherein the recording devices (20) of the recording system (2) are synchronized with each other by peer-to-peer communication,
wherein, when there is falsification of recording information at one of the recording devices (20) of the recording system (2), appropriate recording information is determined by majority vote, and falsified recording information is corrected immediately,
wherein the recording system (2) is a distributed recording system to which a block chain is applied, and the recording system (2) is configured such that, when data contained in one block of the block chain is falsified, falsification is immediately detected due to loss of consistency with other blocks linked to the one block, and
wherein the design information is encrypted and recorded in the recording system (2).

2. The information provision system (1) according to claim 1,
wherein the design information acquisition unit (102) is configured to refer to one of the recording devices (20) included in the recording system (2) and acquire the design information.

3. The information provision system (1) according to claim 2,
wherein the design information is encrypted and recorded in the recording system (2).

4. The information provision system (1) according to any one of claims 1 to 3,
wherein the artificial intelligence generation unit (103) is configured to generate a part of the learned artificial intelligence on the basis of the acquired parameter group and the acquired design information, and
the support information transmission unit (104) is configured to transmit intermediate data output from the part of the generated artificial intelligence to the information processing device of the customer as the support information.

5. The information provision system (1) according to any one of claims 1 to 4, further comprising:
an additional learning processing unit (105) configured to duplicate artificial intelligence equivalent to the learned artificial intelligence, to use a plant data group provided by the customer who is provided with the support information as teacher data, and to cause at least a part of the duplicated artificial intelligence to perform additional learning.

6. The information provision system (1) according to any one of claims 1 to 5, further comprising:
the information processing device, and
wherein the artificial intelligence generation unit (103) is configured to generate only a part of the learned artificial intelligence in the information provision device (10), and to construct a remained part in the information processing device.

7. An information provision method by an information provision system (1) comprising an information provision device (10), which provides customer-desired support information using learned artificial intelligence, the information provision method comprising:
a parameter group acquisition step of referring to one of recording devices (20) included in a recording system (2) in which parameter groups characterizing the learned artificial intelligence are distributed and recorded in the recording devices (20) in advance, and acquiring the parameter groups;
a design information acquisition step of acquiring design information in which information capable of identifying an application place in the learned artificial intelligence of each of the parameter groups is specified;
an artificial intelligence generation step of generating at least a part of the learned artificial intelligence on the basis of the acquired parameter groups and the acquired design information; and
a support information transmission step of transmitting the support information output from at least a part of the generated artificial intelligence to an information processing device of a customer,
wherein the design information is prepared separately from the parameter groups,
wherein the recording devices (20) of the recording system (2) are synchronized with each other by peer-to-peer communication,
wherein, when there is falsification of recording information at one of the recording devices (20) of the recording system (2), appropriate recording information is determined by majority vote, and falsified recording information is corrected immediately,
wherein the recording system (2) is comprised in said information providing system and is a distributed recording system to which a block chain is applied, and the recording system (2) is configured such that, when data contained in one block of the block chain is falsified, falsification is immediately detected due to loss of consistency with other blocks linked to the one block, and
wherein the design information is encrypted and recorded in the recording system (2).

8. A program which causes an information provision system (1) comprising an information provision device (10) for providing customer-desired support information using learned artificial intelligence to execute:
a parameter group acquisition step of referring to one of recording devices (20) included in a recording system (2) in which parameter groups characterizing the learned artificial intelligence are distributed and recorded in the recording devices (20) in advance, and acquiring the parameter groups;
a design information acquisition step of acquiring design information in which information capable of identifying an application place in the learned artificial intelligence of each of the parameter groups is specified;
an artificial intelligence generation step of generating at least a part of the learned artificial intelligence on the basis of the acquired parameter groups and the acquired design information; and
a support information transmission step of transmitting the support information output from at least a part of the generated artificial intelligence to an information processing device of a customer,
wherein the design information is prepared separately from the parameter groups,
wherein the recording devices (20) of the recording system (2) are synchronized with each other by peer-to-peer communication,
wherein, when there is falsification of recording information at one of the recording devices (20) of the recording system (2), appropriate recording information is determined by majority vote, and falsified recording information is corrected immediately,
wherein the recording system (2) is comprised in said information providing system and is a distributed recording system to which a block chain is applied, and the recording system (2) is configured such that, when data contained in one block of the block chain is falsified, falsification is immediately detected due to loss of consistency with other blocks linked to the one block, and
wherein the design information is encrypted and recorded in the recording system (2).

## Patentansprüche

1. Informationsbereitstellungssystem (1), umfassend:
eine Informationsbereitstellungsvorrichtung (10), die so konfiguriert ist, dass sie vom Kunden gewünschte Unterstützungsinformationen unter Verwendung einer erlernten künstlichen Intelligenz bereitstellt, wobei die Informationsbereitstellungsvorrichtung (10) umfasst:
eine Parametergruppen-Erfassungseinheit (101), die so konfiguriert ist, dass sie auf eine von Aufzeichnungsvorrichtungen (20) verweist, die in einem Aufzeichnungssystem (2) umfasst sind, in dem Parametergruppen, die die erlernte künstliche Intelligenz kennzeichnen, verteilt und in den Aufzeichnungsvorrichtungen (20) im Voraus aufgezeichnet sind, und dass sie die Parametergruppen erfasst;
eine Designinformationserfassungseinheit (102), die so konfiguriert ist, dass sie Designinformationen erfasst, in denen Informationen spezifiziert sind, die einen Anwendungsort in der erlernten künstlichen Intelligenz jeder der Parametergruppen identifizieren können;
eine künstliche Intelligenz-Erzeugungseinheit (103), die so konfiguriert ist, dass sie auf der Basis der erworbenen Parametergruppen und der erworbenen Designinformationen zumindest einen Teil der erlernten künstlichen Intelligenz erzeugt; und
eine Unterstützungsinformations-Übertragungseinheit (104), die so konfiguriert ist, dass sie die Unterstützungsinformationen, die von zumindest einem Teil der erzeugten künstlichen Intelligenz ausgegeben werden, an eine Informationsverarbeitungsvorrichtung eines Kunden überträgt, wobei die Designinformationen getrennt von den Parametergruppen vorbereitet werden; und
das Aufzeichnungssystem (2),
wobei die Aufzeichnungsvorrichtungen (20) des Aufzeichnungssystems (2) durch Peer-to-Peer-Kommunikation miteinander synchronisiert sind,
wobei bei einer Fälschung von Aufzeichnungsinformationen an einer der Aufzeichnungsvorrichtungen (20) des Aufzeichnungssystems (2) durch Mehrheitsbeschluss geeignete Aufzeichnungsinformationen bestimmt werden, und gefälschte Aufzeichnungsinformationen sofort korrigiert werden,
wobei das Aufzeichnungssystem (2) ein verteiltes Aufzeichnungssystem ist, auf das eine Blockkette angewendet wird, und das Aufzeichnungssystem (2) derart konfiguriert ist, dass, wenn Daten, die in einem Block der Blockkette enthalten sind, gefälscht werden, die Fälschung aufgrund eines Konsistenzverlusts mit anderen Blöcken, die mit dem einen Block verknüpft sind, sofort erfasst wird, und
wobei die Designinformationen verschlüsselt und in dem Aufzeichnungssystem (2) aufgezeichnet werden.

2. Informationsbereitstellungssystem (1) gemäß Anspruch 1, wobei die Designinformationserfassungseinheit (102) so konfiguriert ist, dass sie auf eine der im Aufzeichnungssystem (2) enthaltenen Aufzeichnungsvorrichtungen (20) verweist und die Designinformationen erfasst.

3. Informationsbereitstellungssystem (1) gemäß Anspruch 2, wobei die Designinformationen verschlüsselt und in dem Aufzeichnungssystem (2) aufgezeichnet werden.

4. Informationsbereitstellungssystem (1) gemäß einem der Ansprüche 1 bis 3,
wobei die künstliche Intelligenz-Erzeugungseinheit (103) so konfiguriert ist, dass sie einen Teil der erlernten künstlichen Intelligenz auf der Basis der erfassten Parametergruppe und der erfassten Designinformationen erzeugt, und
die Unterstützungsinformations-Übertragungseinheit (104) so konfiguriert ist, dass sie Zwischendaten, die von dem Teil der erzeugten künstlichen Intelligenz ausgegeben werden, als Unterstützungsinformationen an die Informationsverarbeitungsvorrichtung des Kunden überträgt.

5. Informationsbereitstellungssystem (1) gemäß einem der Ansprüche 1 bis 4, ferner umfassend:
eine zusätzliche Lernverarbeitungseinheit (105), die so konfiguriert ist, dass sie künstliche Intelligenz, die der erlernten künstlichen Intelligenz entspricht, dupliziert,
eine Anlagendaten-Gruppe, die von dem Kunden bereitgestellt wird, dem die Unterstützungsinformationen bereitgestellt werden, als Lehrerdaten verwendet und bewirkt, dass zumindest ein Teil der duplizierten künstlichen Intelligenz zusätzliches Lernen ausführt.

6. Informationsbereitstellungssystem (1) gemäß einem der Ansprüche 1 bis 5, ferner umfassend:
die Informationsverarbeitungsvorrichtung, und
wobei die künstliche Intelligenz-Erzeugungseinheit (103) so konfiguriert ist, dass sie nur einen Teil der erlernten künstlichen Intelligenz in der
Informationsbereitstellungsvorrichtung (10) erzeugt und einen verbleibenden Teil in der
Informationsverarbeitungsvorrichtung aufbaut.

7. Informationsbereitstellungsverfahren durch ein Informationsbereitstellungssystem (1), das eine Informationsbereitstellungsvorrichtung (10) umfasst, die vom Kunden gewünschte Unterstützungsinformationen unter Verwendung einer erlernten künstlichen Intelligenz bereitstellt, wobei das Informationsbereitstellungsverfahren umfasst:
einen Parametergruppen-Erfassungsschritt, bei dem auf eine der Aufzeichnungsvorrichtungen (20) Bezug genommen wird, die in einem Aufzeichnungssystem (2) enthalten sind, in dem Parametergruppen, die die erlernte künstliche Intelligenz kennzeichnen, verteilt und in den Aufzeichnungsvorrichtungen (20) im Voraus aufgezeichnet sind, und bei dem die Parametergruppen erfasst werden;
einen Designinformationserfassungsschritt, bei dem Designinformationen erfasst werden, in denen Informationen spezifiziert sind, die einen Anwendungsort in der erlernten künstlichen Intelligenz jeder der Parametergruppen identifizieren können;
einen künstlichen Intelligenzerzeugungsschritt, bei dem mindestens ein Teil der erlernten künstlichen Intelligenz auf der Basis der erfassten Parametergruppen und der erfassten Designinformationen erzeugt wird; und
einen Unterstützungsinformationsübertragungsschritt zum Übertragen der Unterstützungsinformation, die von mindestens einem Teil der erzeugten künstlichen Intelligenz ausgegeben wird, an eine Informationsverarbeitungsvorrichtung eines Kunden,
wobei die Designinformation getrennt von den Parametergruppen vorbereitet wird,
wobei die Aufzeichnungsvorrichtungen (20) des Aufzeichnungssystems (2) durch Peer-to-Peer-Kommunikation miteinander synchronisiert sind,
wobei, wenn eine Fälschung von Aufzeichnungsinformation an einer der Aufzeichnungsvorrichtungen (20) des Aufzeichnungssystems (2) eine geeignete Aufzeichnungsinformation durch Mehrheitsbeschluss bestimmt wird und die gefälschte Aufzeichnungsinformation sofort korrigiert wird,
wobei das Aufzeichnungssystem (2) in dem Informationsbereitstellungssystem umfasst ist und ein verteiltes Aufzeichnungssystem ist, auf das eine Blockkette angewendet wird, und das Aufzeichnungssystem (2) derart konfiguriert ist, dass, wenn Daten, die in einem Block der Blockkette enthalten sind, gefälscht werden,
die Fälschung aufgrund des Verlusts der Konsistenz mit anderen Blöcken, die mit dem einen Block verknüpft sind, sofort erfasst wird, und
wobei die Designinformationen verschlüsselt und in dem Aufzeichnungssystem (2) aufgezeichnet werden.

8. Programm, das ein Informationsbereitstellungssystem (1) veranlasst, das eine Informationsbereitstellungsvorrichtung (10) zum Bereitstellen von vom Kunden gewünschten Unterstützungsinformationen unter Verwendung einer erlernten künstlichen Intelligenz umfasst, Folgendes auszuführen:
einen Parametergruppen-Erfassungsschritt, bei dem auf eine der Aufzeichnungsvorrichtungen (20) verwiesen wird, die in einem Aufzeichnungssystem (2) enthalten sind, in dem Parametergruppen, die die erlernte künstliche Intelligenz kennzeichnen, verteilt und in den Aufzeichnungsvorrichtungen (20) im Voraus aufgezeichnet sind, und bei dem die Parametergruppen erfasst werden;
einen Designinformationserfassungsschritt, bei dem Designinformationen erfasst werden, in denen Informationen spezifiziert sind, die einen Anwendungsort in der erlernten künstlichen Intelligenz jeder der Parametergruppen identifizieren können;
einen Schritt zum Erzeugen künstlicher Intelligenz, bei dem mindestens ein Teil der erlernten künstlichen Intelligenz auf der Basis der erfassten Parametergruppen und der erfassten Designinformationen erzeugt wird; und
einen Unterstützungsinformationsübertragungsschritt zum Übertragen der Unterstützungsinformation, die von mindestens einem Teil der erzeugten künstlichen Intelligenz ausgegeben wird, an eine Informationsverarbeitungsvorrichtung eines Kunden,
wobei die Designinformation getrennt von den Parametergruppen vorbereitet wird,
wobei die Aufzeichnungsvorrichtungen (20) des Aufzeichnungssystems (2) durch Peer-to-Peer-Kommunikation miteinander synchronisiert werden,
wobei, wenn eine Fälschung von Aufzeichnungsinformation an einer der Aufzeichnungsvorrichtungen (20) des Aufzeichnungssystems (2) eine geeignete Aufzeichnungsinformation durch Mehrheitsbeschluss bestimmt wird und die gefälschte Aufzeichnungsinformation sofort korrigiert wird,
wobei das Aufzeichnungssystem (2) in dem Informationsbereitstellungssystem umfasst ist und ein verteiltes Aufzeichnungssystem ist, auf das eine Blockkette angewendet wird, und das Aufzeichnungssystem (2) derart konfiguriert ist, dass, wenn Daten, die in einem Block der Blockkette enthalten sind, gefälscht werden, die Fälschung aufgrund eines Konsistenzverlusts mit anderen Blöcken, die mit dem einen Block verknüpft sind, sofort erfasst wird, und wobei die Designinformationen verschlüsselt und in dem Aufzeichnungssystem (2) aufgezeichnet werden.

## Revendications

1. Système de diffusion d'informations (1) comportant :
un dispositif de diffusion d'informations (10) configuré pour diffuser des informations d'assistance souhaitées par le client à l'aide d'une intelligence artificielle apprise, le dispositif de diffusion d'informations (10) comportant :
une unité d'acquisition de groupe de paramètres (101) configurée pour se référer à l'un parmi des dispositifs d'enregistrement (20) inclus dans un système d'enregistrement (2) dans lequel des groupes de paramètres caractérisant l'intelligence artificielle apprise sont répartis et enregistrés dans les dispositifs d'enregistrement (20) à l'avance, et pour acquérir les groupes de paramètres ;
une unité d'acquisition d'informations de conception (102) configurée pour acquérir des informations de conception dans lesquelles des informations aptes à identifier un lieu d'application dans l'intelligence artificielle apprise de chacun des groupes de paramètres sont spécifiées ;
une unité de génération d'intelligence artificielle (103) configurée pour générer au moins une partie de l'intelligence artificielle apprise sur la base des groupes de paramètres acquis et des informations de conception acquises ; et
une unité de transmission d'informations d'assistance (104) configurée pour transmettre les informations d'assistance provenant d'au moins une partie de l'intelligence artificielle générée à un dispositif de traitement d'informations d'un client,
dans lequel les informations de conception sont préparées séparément des groupes de paramètres ; et
le système d'enregistrement (2),
dans lequel les dispositifs d'enregistrement (20) du système d'enregistrement (2) sont synchronisés les uns avec les autres par communication pair à pair,
dans lequel, lorsqu'il y a falsification d'informations d'enregistrement au niveau de l'un des dispositifs d'enregistrement (20) du système d'enregistrement (2), des informations d'enregistrement appropriées sont déterminées par vote majoritaire, et des informations d'enregistrement falsifiées sont corrigées immédiatement,
dans lequel le système d'enregistrement (2) est un système d'enregistrement réparti auquel une chaîne de blocs est appliquée, et le système d'enregistrement (2) est configuré de sorte que, lorsque des données contenues dans un bloc de la chaîne de blocs sont falsifiées, la falsification est immédiatement détectée en raison d'une perte de cohérence avec d'autres blocs liés au bloc en question, et
dans lequel les informations de conception sont chiffrées et enregistrées dans le système d'enregistrement (2).

2. Système de diffusion d'informations (1) selon la revendication 1,
dans lequel l'unité d'acquisition d'informations de conception (102) est configurée pour se référer à l'un des dispositifs d'enregistrement (20) compris dans le système d'enregistrement (2) et acquérir les informations de conception.

3. Système de diffusion d'informations (1) selon la revendication 2,
dans lequel les informations de conception sont chiffrées et enregistrées dans le système d'enregistrement (2).

4. Système de diffusion d'informations (1) selon l'une quelconque des revendications 1 à 3,
dans lequel l'unité de génération d'intelligence artificielle (103) est configurée pour générer une partie de l'intelligence artificielle apprise sur la base du groupe de paramètres acquis et des informations de conception acquises, et
l'unité de transmission d'informations d'assistance (104) est configurée pour transmettre des données intermédiaires provenant de la partie de l'intelligence artificielle générée au dispositif de traitement d'informations du client en tant qu'informations d'assistance.

5. Système de diffusion d'informations (1) selon l'une quelconque des revendications 1 à 4, comprenant en outre :
une unité de traitement d'apprentissage supplémentaire (105) configurée pour dupliquer une intelligence artificielle équivalente à l'intelligence artificielle apprise, pour utiliser un groupe de données d'usine fourni par le client qui est fourni avec les informations d'assistance en tant que données d'enseignant, et pour amener au moins une partie de l'intelligence artificielle dupliquée à effectuer un apprentissage supplémentaire.

6. Système de diffusion d'informations (1) selon l'une quelconque des revendications 1 à 5, comprenant en outre :
le dispositif de traitement de l'information, et
dans lequel l'unité de génération d'intelligence artificielle (103) est configurée pour générer uniquement une partie de l'intelligence artificielle apprise dans le dispositif de diffusion d'informations (10), et pour construire une partie restante dans le dispositif de traitement d'informations.

7. Procédé de diffusion d'informations par un système de diffusion d'informations (1) comprenant un dispositif de diffusion d'informations (10), qui diffuse des informations d'assistance souhaitées par le client à l'aide d'une intelligence artificielle apprise, le procédé de diffusion d'informations comprenant :
une étape d'acquisition de groupe de paramètres consistant à se référer à l'un parmi des dispositifs d'enregistrement (20) inclus dans un système d'enregistrement (2) dans lequel des groupes de paramètres caractérisant l'intelligence artificielle apprise sont répartis et enregistrés dans les dispositifs d'enregistrement (20) à l'avance, et à acquérir les groupes de paramètres ;
une étape d'acquisition d'informations de conception consistant à acquérir des informations de conception dans lesquelles des informations aptes à identifier un lieu d'application dans l'intelligence artificielle apprise de chacun des groupes de paramètres sont spécifiées ;
une étape de génération d'intelligence artificielle consistant à générer au moins une partie de l'intelligence artificielle apprise sur la base des groupes de paramètres acquis et des informations de conception acquises ; et
une étape de transmission d'informations d'assistance consistant à transmettre les informations d'assistance provenant d'au moins une partie de l'intelligence artificielle générée à un dispositif de traitement d'informations d'un client,
dans lequel les informations de conception sont préparées séparément des groupes de paramètres,
dans lequel les dispositifs d'enregistrement (20) du système d'enregistrement (2) sont synchronisés les uns avec les autres par communication pair à pair,
dans lequel, lorsqu'il y a falsification d'informations d'enregistrement au niveau de l'un des dispositifs d'enregistrement (20) du système d'enregistrement (2), des informations d'enregistrement appropriées sont déterminées par vote majoritaire, et des informations d'enregistrement falsifiées sont corrigées immédiatement,
dans lequel le système d'enregistrement (2) est compris dans ledit système de diffusion d'informations et est un système d'enregistrement réparti auquel une chaîne de blocs est appliquée, et le système d'enregistrement (2) est configuré de sorte que, lorsque des données contenues dans un bloc de la chaîne de blocs sont falsifiées, une falsification est immédiatement détectée en raison d'une perte de cohérence avec d'autres blocs liés au bloc en question, et
dans lequel les informations de conception sont chiffrées et enregistrées dans le système d'enregistrement (2).

8. Programme qui amène un système de diffusion d'informations (1) comprenant un dispositif de diffusion d'informations (10) pour diffuser des informations d'assistance souhaitées par le client à l'aide d'une intelligence artificielle apprise, à exécuter :
une étape d'acquisition de groupe de paramètres consistant à se référer à l'un parmi des dispositifs d'enregistrement (20) inclus dans un système d'enregistrement (2) dans lequel des groupes de paramètres caractérisant l'intelligence artificielle apprise sont répartis et enregistrés dans les dispositifs d'enregistrement (20) à l'avance, et à acquérir les groupes de paramètres ;
une étape d'acquisition d'informations de conception consistant à acquérir des informations de conception dans lesquelles des informations aptes à identifier un lieu d'application dans l'intelligence artificielle apprise de chacun des groupes de paramètres sont spécifiées ;
une étape de génération d'intelligence artificielle consistant à générer au moins une partie de l'intelligence artificielle apprise sur la base des groupes de paramètres acquis et des informations de conception acquises ; et
une étape de transmission d'informations d'assistance consistant à transmettre les informations d'assistance provenant d'au moins une partie de l'intelligence artificielle générée à un dispositif de traitement d'informations d'un client,
dans lequel les informations de conception sont préparées séparément des groupes de paramètres,
dans lequel les dispositifs d'enregistrement (20) du système d'enregistrement (2) sont synchronisés les uns avec les autres par communication pair à pair,
dans lequel, lorsqu'il y a falsification d'informations d'enregistrement au niveau de l'un des dispositifs d'enregistrement (20) du système d'enregistrement (2), des informations d'enregistrement appropriées sont déterminées par vote majoritaire, et des informations d'enregistrement falsifiées sont corrigées immédiatement,
dans lequel le système d'enregistrement (2) est compris dans ledit système de diffusion d'informations et est un système d'enregistrement réparti auquel une chaîne de blocs est appliquée, et le système d'enregistrement (2) est configuré de sorte que, lorsque des données contenues dans un bloc de la chaîne de blocs sont falsifiées, une falsification est immédiatement détectée en raison d'une perte de cohérence avec d'autres blocs liés au bloc en question, et
dans lequel les informations de conception sont chiffrées et enregistrées dans le système d'enregistrement (2).
